# NEUE EUROPÄISCHE PATENTSCHRIFT

(11) **EP 0 562 278 B2**
(45) Veröffentlichungstag und Bekanntmachung des Hinweises auf die Entscheidung über den Einspruch: **25.08.1999**
(45) Hinweis auf die Patenterteilung: 30.10.1996
(21) Anmeldenummer: 93102596.9
(22) Anmeldetag: 19.02.1993
(51) Int. Cl.: B01D 53/34

(54) **Verfahren und Vorrichtung zur Nutzung der Restwärme von Rauchgas**
Process and apparatus for using the residual heat of exhaust gas
Procédé et dispositif pour l'utilisation de la chaleur résiduelle de gaz de fumée

(30) Priorität: 21.03.1992 DE 4209234; 02.07.1992 DE 9208823 U
(43) Veröffentlichungstag der Anmeldung: 29.09.1993
(73) Patentinhaber: BDAG Balcke-Dürr Aktiengesellschaft, D-40882 Ratingen (DE)
(72) Erfinder: Kienböck, Martin, W-4030 Ratingen 6 (DE); Kehr, Manfred, Dr., W-4358 Haltern (DE)
(74) Vertreter: Stenger, Watzke & Ring Patentanwälte

(56) Entgegenhaltungen:
- EP-A- 0 183 891
- EP-A- 0 558 899
- DE-C- 976 167
- DE-C- 1 252 349
- GB-A- 841 040
- GB-A- 2 138 555
- US-A- 5 024 171

## Beschreibung

Die Erfindung betrifft ein Verfahren und eine Vorrichtung zur Nutzung der Restwärme von insbesondere über eine Rauchgasentschwefelungsanlage in die Atmosphäre abgeführtem Rauchgas eines mit fossilen Brennstoffen, insbesondere Braunkohle betriebenen Dampferzeugers.

Bei den bekannten, mit einer Rauchgasentschwefelungsanlage ausgerüsteten Kraftwerken wird die dem Dampfkessel zugeführte Verbrennungsluft zwecks Verbesserung des Kraftwerkwirkungsgrades einem Luftvorwärmer zugeführt, der durch die den Dampfkessel verlassenden Rauchgase beheizt wird. Die auf diese Weise abgekühlten Rauchgase werden normalerweise in einem Elektrofilter gereinigt, bevor sie der Rauchgasentschwefelungsanlage zugeführt werden. Die entschwefelten Rauchgase gelangen schließlich mittels eines Rauchgaskamins oder eines Kühlturms in die Atmosphäre, wobei die Austragung der gereinigten Rauchgase über den Kühlturm den Vorteil hat, daß auch beim Reinigungsprozeß in der Rauchgasentschwefelungsanlage abgekühlte und mit Feuchtigkeit beladene Rauchgase in die Atmosphäre ausgetragen werden können, ohne daß es einer gezielten Wiederaufheizung dieser Rauchgase bedarf.

Bei Kraftwerken, deren Dampferzeuger mit fossilen Brennstoffen, insbesondere Braunkohle betrieben werden, ergibt sich ein großes Rauchgasvolumen im Verhältnis zur Brennluft. In Braunkohlekraftwerken liegt dieses Verhältnis bei ca. 1,6 zu 1. Da zur Vermeidung von Korrosion außerdem ein gewisser Abstand der Abgastemperatur zum Säuretaupunkt eingehalten werden muß, liegt bei derartigen Kraftwerken die Rauchgastemperatur nach dem Austritt des Rauchgases aus dem Elektrofilter bei etwa 170° C.

Da andererseits die für den Prozeß der Rauchgasentschwefelung erforderliche Temperatur bei etwa 110° C liegt, wird bei den bekannten Kraftwerken die Temperatur des Rauchgases vor dem Eintritt in die Rauchgasentschwefelungsanlage durch Einspritzen von Wasser von etwas 170° C auf etwa 110° C abgebaut. Hiermit ist ein Wirkungsgradverlust von etwa 3 % verbunden. Bei einem Braunkohleblock mit einer elektrischen Leistung von 800 MW, d.h. einer thermischen Leistung von etwa 2.400 MW liegt der geschilderte Verlust des durch Wassereinspritzung abgebauten Wärmeüberschusses im Rauchgas bei einer thermischen Leistung von etwa 80 MW, d.h. etwa 3 % des Gesamtwirkungsgrades des Braunkohleblocks.

Aus der GB-A-841 040 waren ein Verfahren und eine Vorrichtung zur Nutzung von Restwärme im Rauchgas eines mit fossilen Brennstoffen betriebenen Dampferzeugers bekannt, wobei das Rauchgas nacheinander zwei Luftvorwärmer zur Vorwärmung der Verbrennungsluft durchströmt. Um das Risiko von Korrosionsschäden in den Luftvorwärmern zu verringern, ist den Luftvorwärmern in Strömungsrichtung der aufzuheizenden Verbrennungsluft ein dampfbeheizter Luftvorwärmer vorgeschaltet; der unter einem niedrigen Druck stehende Dampf zur Beheizung dieses zusätzlichen Luftvorwärmers wird in einem Abhitzerückgewinnungskessel erzeugt, der entweder von dem in der Rauchgashauptleitung strömenden Rauchgas oder von einem Rauchgasteilstrom beheizt wird, der vor dem rauchgasseitig ersten Luftvorwärmer vom Rauchgashauptstrom abgezweigt wird. Im letztgenannten Fall wird das Speisewasser für den Abhitzerückgewinnungskessel durch einen Teilstrom des Rauchgases vorgewärmt, der im Bypass zum rauchgasseitig zweiten Luftvorwärmer geführt wird.

Mit diesem aus der GB-A-841 040 bekannten Verfahren und der zugehörigen Vorrichtung werden Korrosionsschäden in den Luftvorwärmern weitgehend vermieden.

Ausgehend von dem aus der GB-A-841 040 bekannten Stand der Technik liegt der Erfindung die **Aufgabe** zugrunde, das bekannte Verfahren und die zugehörige Vorrichtung derart weiterzubilden, daß auch der nicht zur Verbrennungsluftvorwärmung benötigte Wärmeüberschuß im Rauchgas zur Verbesserung des Gesamtwirkungsgrades des Kraftwerkes genutzt wird.

Die **Lösung** dieser Aufgabenstellung durch das erfindungsgemäße Verfahren ist durch die Merkmale des Ansprüches 1 gekennzeichnet.

Durch die Umgehung der beiden Luftvorwärmer durch einen im Bypass geführten Teilstrom des Rauchgases ergibt sich in beiden Luftvorwärmern ein Rauchgas-Luft-Verhältnis von ungefähr 1, wodurch einerseits eine wirtschaftliche Auslegung der Luftvorwärmer und andererseits eine Nutzung der Restwärme, möglich ist, wobei der durch die in den beiden Bypassleitungen angeordneten Dampferzeuger erzeugte Dampf unterschiedliche Drücke aufweist und der nicht zur Verbrennungsluftvorwärmung benötigte Wärmeüberschuß im Rauchgas den beiden Teilströmen entspricht.

Die auf diese Weise gewonnene Leistung liegt bei 2 bis 3 % der Leistung des Gesamtkraftwerkes. Diese Leistungsrückgewinnung ist auch möglich, wenn keine Rauchgasentschwefelungsanlage vorhanden ist und das Rauchgas nach dem zweiten Luftvorwärmer direkt einem Kamin oder Kühlturm zur Ableitung in die Atmosphäre zugeführt wird.

Der aus dem Wärmeüberschuß erzeugte Dampf kann unmittelbar zu Heizzwecken verwendet werden, und zwar entweder als reine Fremdheizung oder zur Beheizung von Wärmetauschern des Kraftwerkes. Alternativ ist es möglich, den aus dem Wärmeüberschuß erzeugten Dampf der vorhandenen Turbine des Kraftwerkes oder einer zusätzlichen Turbine zuzuführen. Im letztgenannten Fall wird diese Turbine vorzugsweise als Zweidruckturbine ausgeführt, da der durch die in den beiden Bypassleitungen angeordneten Dampferzeuger erzeugte Dampf unterschiedliche Drücke aufweist.

Ausgehend von der aus der GB-A-841 040 bekannten Vorrichtung, die mit zwei Luftvorwärmern ausgestattet ist, wobei vor beiden Luftvorwärmern jeweils eine Bypassleitung für einen Teilstrom des Rauchgases abgezweigt ist und in der vor dem in Strömungsrichtung des Rauchgases zuerst in der rauchgasseitig ersten Bypassleitung ein Dampferzeuger angeordnet ist, besteht die erfindungsgemäße Weiterbildung darin, daß gemäß Anspruch 3 in den beiden Bypassleitungen jeweils ein Dampferzeuger angeordnet ist, im Dampf unterschiedlichen Drücke erzeugen.

Gemäß einer Weiterbildung der Erfindung ist in der rauchgasseitig ersten Bypassleitung sowohl ein Dampfüberhitzer für den in dieser Bypassleitung angeordneten Dampferzeuger als auch ein Dampfüberhitzer für den in der anderen Bypassleitung angeordneten Dampferzeuger angeordnet. Hierdurch wird eine Überhitzung auch des aus der Bypassleitung mit niedrigerem Temperaturniveau stammenden Dampfes möglich. Den beiden Dampferzeugern bzw. Dampfüberhitzern ist vorzugsweise eine Zweidruckturbine nachgeschaltet.

Mit der Erfindung wird schließlich vorgeschlagen, in jeder Bypassleitung eine Regelklappe anzuordnen, so daß der Rauchgasstrom gezielt zwischen der Rauchgashauptleitung und den Bypassleitungen aufgeteilt werden kann und darüber hinaus ein Verschließen der Bypassleitungen möglich ist.

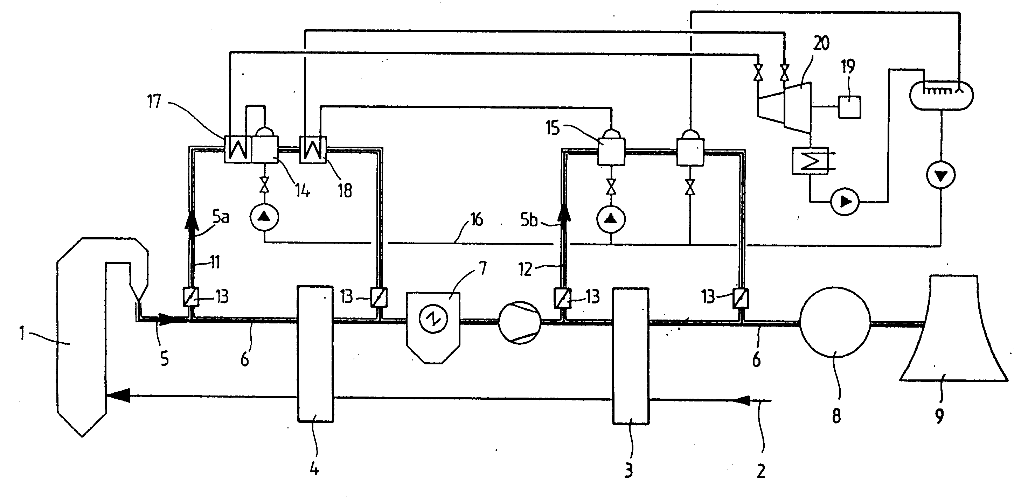

Auf der Zeichnung ist ein Ausführungsbeispiel einer erfindungsgemäßen Vorrichtung anhand eines Schaltbildes dargestellt.

Das Schaltbild zeigt einen mit Braunkohle befeuerten Dampferzeuger 1, dessen über eine Verbrennungsluftleitung 2 zugeführte Verbrennungsluft vor dem Eintritt in den Dampferzeuger 1 durch zwei Luftvorwärmer 3 und 4 vorgewärmt wird. Diese Luftvorwärmer 3 und 4 werden vom Rauchgas 5 beheizt, das den Dampferzeuger 1 durch eine Rauchgashauptleitung 6 verläßt. In dieser Rauchgashauptleitung 6 ist zwischen den beiden Luftvorwärmern 3 und 4 ein Elektrofilter 7 angeordnet. Die Rauchgashauptleitung 6 führt zu einer Rauchgasentschwefelungsanlage 8, aus welcher das entschwefelte Rauchgas beim Ausführungsbeispiel einem Kühlturm 9 zugeführt wird, der das Rauchgas in die Atmosphäre austrägt.

Jedem Luftvorwärmer 3 bzw. 4 ist eine Bypassleitung 11 bzw. 12 zugeordnet, die jeweils über eine Regelklappe 13 an die Rauchgashauptleitung 6 angeschlossen sind. Hierdurch ist es möglich, mittels der beiden Bypassleitungen 11 bzw. 12 jeweils einen Rauchgasteilstrom 5a bzw. 5b aus dem Rauchgashauptstrom abzuzweigen. Die Größe dieser Rauchgasteilströme 5a und 5b wird derart gewählt, daß den beiden Luftvorwärmern 3 und 4 jeweils eine Rauchgasmenge zugeführt wird, die der aufzuheizenden Luftmenge entspricht.

Da die Rauchgasteilströme 5a und 5b nicht zur Aufheizung der Verbrennungsluft 2 herangezogen werden, wird ihr verwertbarer Wärmeinhalt zur Erzeugung von Dampf benutzt. Zu diesem Zweck ist in der Bypassleitung 11 ein Dampferzeuger 14 und in der Bypassleitung 12 ein Dampferzeuger 15 angeordnet. Diesen jeweils an eine gemeinsame Speisewasserleitung 16 angeschlossenen Dampferzeugern 14 und 15 ist jeweils ein Dampfüberhitzer 17 bzw. 18 nachgeschaltet. Der Dampferüberhitzer 17 des Dampferzeugers 14 liegt hierbei in Strömungsrichtung des Rauchgasteilstromes 5a vor dem Dampfüberhitzer 14. Der Dampfüberhitzer 18 des Dampferzeugers 15 ist in der Bypassleitung 11 angeordnet, und zwar in Strömungsrichtung des Rauchgasteilstroms 5a hinter dem Dampferzeuger 14.

Der mit den beiden Dampferzeugern 14 und 15 erzeugte Dampf kann entweder unmittelbar zu Heizzwecken verwendet werden, und zwar als reine Fremdheizung, oder Wärmetauschern des Kraftwerkes zur Beheizung oder einer Turbine zur Stromerzeugung zugeführt werden. Hierbei ist es möglich, den erzeugten Dampf der bereits vorhandenen Turbine des Kraftwerkes zuzuführen oder einer zusätzlichen Turbine, wie dies bei dem dargestellten Ausführungsbeispiel der Fall ist. Diese einen Generator 19 antreibende Turbine ist als Zweidruckturbine 20 ausgeführt, da der mit den Dampferzeugern 14 und 15 erzeugte Dampf mit unterschiedlichem Druck anfällt.

Unabhängig von der Art der Verwendung des mit den Dampferzeugern 14 und 15 erzeugten Dampfes ergibt das voranstehend geschilderte Verfahren eine wirtschaftliche Nutzung des für den Betrieb der Rauchgasentschwefelungsanlage 8 nicht benötigten Wärmeüberschusses im Rauchgas 5, der sich aufgrund des großen Rauchgasvolumenstromes im Verhältnis zur Verbrennungsluft und der Einhaltung eines erforderlichen Abstandes der Rauchgastemperatur zum Säuretaupunkt ergibt.

### Bezugszeichenliste

- 1: Dampferzeuger
- 2: Verbrennungsluftleitung
- 3: Luftvorwärmer
- 4: Luftvorwärmer
- 5: Rauchgas
- 5a: Rauchgasteilstrom
- 5b: Rauchgasteilstrom
- 6: Rauchgashauptleitung
- 7: Elektrofilter
- 8: Rauchgasentschwefelungsanlage
- 9: Kühlturm
- 11: Bypassleitung
- 12: Bypassleitung
- 13: Regelklappe
- 14: Dampferzeuger
- 15: Dampferzeuger
- 16: Speisewasserleitung
- 17: Dampfüberhitzer
- 18: Dampfüberhitzer
- 19: Generator
- 20: Zweidruckturbine

## Patentansprüche

1. Verfahren zur Nutzung der Restwärme von, insbesondere über eine Rauchgasentschwefelungsanlage (8), in die Atmosphäre abgeführtem Rauchgas (5) eines mit fossilen Brennstoffen, insbesondere Braunkohle, betriebenen Dampferzeugers (1), wobei das Rauchgas (5) nacheinander zwei Luftvorwärmer (4,3) zur Vorwärmung der Verbrennungsluft und einen, insbesondere zwischen den beiden Luftvorwärmern angeordneten, Elektrofilter (7) durchströmt, wobei vor dem rauchgasseitig ersten als auch vor dem rauchgasseitig zweiten Luftvorwärmer (4,3) jeweils über eine Bypassleitung (11,12) ein Teilstrom (5a,5b) des Rauchgases (5) zur Dampferzeugung abgezweigt wird, wobei der durch die in den beiden Bypassleitungen angeordneten Dampferzeuger erzeugte Dampf unterschiedliche Drücke aufweist und der nicht zur Verbrennungsluftvorwärmung benötigte Wärmeüberschuß im Rauchgas den beiden Teilströmen entspricht.

2. Verfahren nach Anspruch 1, dadurch gekennzeichnet, daß der aus dem Wärmeüberschuß erzeugte Dampf einer zusätzlichen Turbine (20) zugeführt wird, die als Zweidruckturbine ausgeführt ist.

3. Vorrichtung zur Durchführung des Verfahrens nach Anspruch1, mit zwei Luftvorwärmern (4,3) zur Vorwärmung der Verbrennungsluft und mit einem, insbesondere zwischen diesen beiden Luftvorwärmern angeordneten, Elektrofilter (7) in der Rauchgashauptleitung (6), wobei vor beiden Luftvorwärmern (4,3) jeweils eine Bypassleitung (11;12) für einen Teilstrom (5a,5b) des Rauchgases abgezweigt ist und wobei in den beiden Bypassleitungen jeweils ein Dampferzeuger (14,15), die Dampf unterschiedlicher Drücke erzeugen, angeordnet sind.

4. Vorrichtung nach Anspruch 3, dadurch gekennzeichnet, daß in der rauchgasseitig ersten Bypassleitung (11) sowohl ein Dampfüberhitzer (17) für den in dieser Bypassleitung (11) angeordneten Dampferzeuger (14) als auch ein Dampfüberhitzer (18) für den in der anderen Bypassleitung (12) angeordneten Dampferzeuger (15) angeordnet ist.

5. Vorrichtung nach Anspruch 3 oder 4, dadurch gekennzeichnet, daß in den Bypassleitungen (11, 12) jeweils eine Regelklappe (13) angeordnet ist.

## Claims

1. Method for using the residual heat of flue gas (5) which is discharged into the atmosphere via, in particular, a flue-gas desulphurization system (8), from a steam generator (1) operated with fossil fuels, in particular brown coal, the flue gas (5) flowing in succession through two air heaters (4, 3) for preheating the combustion air and an electrostatic filter (7) arranged, in particular, between the two air heaters, a part-stream (5a, 5b) of the flue gas (5) being branched off for the purpose of steam generation, in each case via a bypass line (11, 12), upstream of the first air heater (4) on the flue-gas side and also upstream of the second air heater (3) on the flue-gas side, the steam generated by the steam generators arranged in the two bypass lines having differing pressures and the excess heat, which is not required for preheating the combustion air, in the flue gas corresponding to the two part-streams.

2. Method according to Claim 1, characterized in that the steam generated from the excess heat is fed to an additional turbine (20) which is designed as a mixed-pressure turbine.

3. Apparatus for carrying out the method according to Claim 1, with two air heaters (4, 3) for preheating the combustion air and with an electrostatic filter (7) arranged, in particular, between these two air heaters in the main flue-gas line (6), a bypass line (11; 12) for a part-stream (5a, 5b) of the flue gas in each case being branched off upstream of the two air heaters (4, 3) and a respective steam generator (14, 15), which generate steam of differing pressures, being arranged in the two bypass lines.

4. Apparatus according to Claim 3, characterized in that both a steam superheater (17) for the steam generator (14) arranged in the bypass line (11) and a steam superheater (18) for the steam generator (15) arranged in the other bypass line (12) are arranged in the first bypass line (11) on the flue-gas side.

5. Apparatus according to Claim 3 or 4, characterized in that a respective control damper (13) is arranged in the bypass lines (11, 12).

## Revendications

1. Procédé pour l'utilisation de la chaleur résiduelle de gaz de fumée (5), qui sont évacués dans l'atmosphère par l'intermédiaire d'une installation de désulfuration de gaz de fumée (8) et qui proviennent d'un générateur de vapeur (1) fonctionnant aux combustibles fossiles, notamment au lignite, les gaz de fumée (5) traversant successivement deux préchauffeurs d'air (4, 3) servant au préchauffage de l'air de combustion et un électrofiltre (7), situé notamment entre les deux préchauffeurs d'air, dans lequel, en amont du premier préchauffeur d'air du côté gaz de fumée de même qu'en amont du second préchauffeur d'air (4, 3) du côté gaz de fumée, un flux partiel (5a, 5b) de gaz de fumée (5) est dévié, chaque fois par l'intermédiaire d'une conduite de dérivation (11, 12) pour une production de vapeur, la vapeur alors produite par les générateurs de vapeur, disposés dans les deux conduites de dérivation, présentant des pressions différentes et l'excédent de chaleur des gaz de fumée, ne servant pas au préchauffage de l'air de combustion, correspondant aux deux flux partiels.

2. Procédé selon la revendication 1, caractérisé en ce que la vapeur produite à partir de l'excédent de chaleur est acheminée vers une turbine (20) supplémentaire, qui est réalisée sous la forme d'une turbine mixte.

3. Dispositif pour la mise en oeuvre du procédé selon la revendication 1, comportant deux préchauffeurs d'air (4, 3) pour le préchauffage de l'air de combustion, et un électrofiltre (7) disposé notamment entre ces deux préchauffeurs d'air dans la conduite principale de gaz de fumée (6), le branchement de chaque fois une conduite de dérivation (11, 12) pour un flux partiel (5a, 5b) des gaz de fumée étant prévu en amont des deux préchauffeurs d'air (4, 3), tandis que, dans les deux conduites de dérivation, est chaque fois disposé un générateur de vapeur (14, 15) pour la production de vapeur ayant des pressions différentes.

4. Dispositif selon la revendication 3, caractérisé en ce qu'il est prévu, dans la première conduite de dérivation (11) du côté gaz de fumée, aussi bien un surchauffeur de vapeur (17) pour le générateur de vapeur (14) disposé dans cette conduite de dérivation (11) qu'un surchauffeur (18) pour le générateur de vapeur (15) disposé dans l'autre conduite de dérivation (12).

5. Dispositif selon la revendication 3 ou 4, caractérisé en ce qu'un volet de réglage (13) est chaque fois disposé dans les conduites de dérivation (11, 12).
